# EUROPEAN PATENT APPLICATION

(11) **EP 4 667 878 A1**
(43) Date of publication of application: **24.12.2025**
(21) Application number: 24275069.3
(22) Date of filing: 19.06.2024
(51) Int. Cl.: G01D 5/347

(54) **METHOD OF MAKING ABSOLUTE POSITION MEASUREMENT SCALE STRUCTURE**

(71) Applicant: Renishaw plc, Wotton-under-Edge, Gloucestershire GL12 8JR (GB)
(72) Inventor: STICKLAND, Thomas John, Wotton-under-Edge, GL12 8JR (GB); REEVE, Theodore Richard, Wotton-under-Edge, GL12 8JR (GB); GORDON-INGRAM, Iain Robert, Wotton-under-Edge, GL12 8JR (GB)
(74) Representative: Rolfe, Edward William

(57) **Abstract**

A method for making an absolute position measurement scale structure which comprises a substrate having a scale track extending along a measurement dimension, the scale track comprising a series of scale features, the method comprising making the scale features via the following two processes: a process configured to alter the substrate within the scale track at regularly spaced locations along the measurement dimension, according to a predetermined spatial period p, so as to form a plurality of primary features; and a process configured to alter the substrate within the scale track at plurality of irregularly spaced locations along the measurement dimension so as to form secondary features.

## Description

The present invention relates to a method of making an absolute position measurement scale structure, and to an absolute position measurement scale structure.

Absolute position encoders which enable the absolute position of a readhead relative to a scale to be determined, without requiring any relative motion therebetween (e.g. on start-up) are known. This is to be contrasted with incremental position encoders, having a scale with one or more reference marks, which require relative motion of the readhead to a reference mark in order to establish a known reference position.

Absolute position encoders typically comprise a scale having at least one track comprising a series of absolute scale features which define a regular series of uniquely identifiable absolute positions along the measurement dimension (such that regardless of where the readhead is along the scale's measuring dimension, the readhead can read the scale and determine from the pattern of scale features, where it is along the measuring dimension without requiring any relative movement along the scale). As is already known, the scale features can be arranged to form, for instance, a pseudorandom bit sequence (e.g. as described in European Patent no. EP0503716, wherein as described therein, a pseudo-random sequence is to be understood to mean a sequence wherein a displacement of the readhead over one pitch of the track always produces a specific code for each pitch) or discrete codewords (e.g. as described in US Patent no. US7499827). Absolute position encoders can provide position information in one dimension, for example as described in US7499827 and EP0503716, or in two dimensions, for instance as described in US Patent no. US6603115B1.

As is already known, the absolute scale features in a scale track can be arranged in accordance with a nominally regular/periodic lattice structure. This has the advantage that fine-pitch phase information can be extracted from a reading of absolute scale features, i.e. position information which is finer than the period of the nominally regular/periodic lattice structure can be extracted from a reading of absolute scale features. Example embodiments of how this can be achieved are explained in US 11619521 and US7499827. As explained in US11619521 and US7499827, this can be achieved even when features are arranged such that they depart from the regular/periodic lattice structure (e.g. so as to define/embed the absolute position information), so long as sufficient periodic structure remains in the absolute scale features.

The present invention concerns an improved method of making an absolute position measurement scale structure.

According to a first aspect of the invention there is provided a method for making an absolute position measurement scale structure which comprises a substrate having a scale track extending along a measurement dimension, the scale track comprising a series of scale features (said series extending along the measurement dimension), the method comprising making the scale features via the following processes:
i) a process configured to alter the substrate within the scale track at regularly spaced locations along the measurement dimension, according to a predetermined spatial period *p*, so as to form a plurality of primary features;
ii) a process configured to alter the substrate within the scale track at plurality of irregularly spaced locations along the measurement dimension so as to form secondary features.

The present invention provides an alternative, useful, and beneficial method for making an absolute position measurement scale structure compared to known techniques such as that described in US7499827. Indeed, the present invention can be beneficial in terms of efficiency and speed of manufacture of the absolute position measurement scale structure, and/or in result in a superior scale structure.

In accordance with the invention, there can be a first process for i) and a second process for ii). These processes can be separate/independent (e.g. independently operable/controlled). These processes could be operated simultaneously, or mutually exclusively. If operated mutually exclusively, these processes/steps could occur in either order. There can be separate control loops for the processes i) and ii). These could be open or closed control loops.

As will be understood, the accuracy of the fine-pitch phase information that can be extracted from a scale can be highly dependent on the spatial periodicity of the scale features from which such information is determined (in other words, can be highly dependent on how well the primary features conform to a given period). The technique of the present invention can be useful in providing a superior technique over existing techniques such as those described in US7499827, for improving the spatial periodicity of the scale features from which such fine-pitch phase information can be determined.

Together, the primary and secondary features make up the absolute scale features, and thereby define a regular series of uniquely identifiable absolute positions along the measurement dimension.

Forming the series of primary features (which are formed at regularly spaced locations) via a separate (and for instance, but not necessarily, mutually-exclusive) process from the secondary features, means that the process for forming the primary features can be unaffected by/uninterrupted by the process for forming the secondary features, thereby enabling the formation of the series of primary features to be optimised, e.g. for manufacturing efficiency and/or spatial periodicity. Accordingly, i) could be described as an uninterrupted process. For example, the method of the invention can be configured such that i) comprises a process that configured to consistently alter the substrate within the scale track at regularly spaced locations along the measurement dimension, according to a predetermined spatial period p, so as to form an uninterrupted series of primary features at the spatial period p (e.g. independent of the process ii) for forming the secondary features).

This method of the invention is in contrast to, for instance, a process where individual scale features are formed on the substrate one-by-one in sequence, in accordance with a nominally regular/periodic lattice, via a process which involves altering the substrate at regularly spaced locations, except for at certain locations of the lattice whereat the substrate alteration process does not take place at such certain locations such that no such individual scale feature is formed meaning that a scale feature is omitted from the otherwise regular/periodic lattice arrangement of scale features, thereby resulting in a pattern of scale features/markings in which absolute position information is embedded therein. For example, such a process can be slower/more inefficient than a process according to the present invention. Additionally/alternatively, due to uneven heating and/or uneven distribution of internal stresses caused by the irregular substrate alteration process, such a process can result in features not actually being formed on the scale in accordance with the nominally regular/periodic lattice despite the substrate altering machine effecting the substrate alteration in precise accordance with the nominally regular/periodic lattice. This can be of particular concern (and/or the problem can be more significant) when dealing with smaller scale periods, such as scale periods of 32 µm or less, for example for scale periods of 20 µm or less, for instance for scale periods of 10 µm or less, for instance for scale periods of approximately 8 µm or less.

The approach of the present invention (e.g. temporally) separates the processes of making the regularly spaced/spatially periodic features and making the irregularly spaced features which encode the absolute position information in the scale track.

Preferably, the length of the primary features (as measured in the measurement dimension) is not greater than 0.75*p* and not less than 0.25*p*. Preferably, the length of the primary features is substantially 0.5*p*. Preferably all of the primary features have substantially the same length.

Preferably, the processes i) and ii) are spatially phased with respect to each other such that, along the measurement dimension, each secondary feature is flanked by primary features. In other words, preferably the regularly spaced locations of the primary features and the irregularly spaced locations of the secondary features are phased with respect to each other such that, along the measurement dimension, each secondary feature is flanked by primary features. The length (as measured along the measurement dimension) and position (along the measurement dimension) of a (e.g. each) secondary feature could be configured such that there are no gaps (is no space) between it and the primary features it is flanked by. Accordingly, preferably, the leading and trailing ends of each scale feature in said track are defined by (the edges of) primary features. A (e.g. each) secondary feature can be flanked by and at least partially overlap with primary features, whereby the leading and trailing ends of each scale feature are defined by (the edges of) primary features. For instance, the length and position of a (e.g. each) secondary feature can be configured such that it overlaps with both of the primary features that it is flanked by. Accordingly, preferably, the length *Ls* of a (e.g. each) secondary feature can be equal to or greater than *p-Lp,* where *Lp* is the length of the primary features as measured along the measurement dimension. Accordingly, in such as case, and in those embodiments in which the length of the primary features (as measured along the measurement dimension) is less than 0.5p, then the secondary features will be longer than the length of the primary features.

The scale features can be described as absolute scale features which define a regular series of uniquely identifiable absolute positions along the measurement dimension. The series of absolute scale features could define a regular series of uniquely identifiable absolute codewords. Optionally, the absolute scale features are configured so as define unique codewords along the entire length of the scale, wherein the length of each codeword is greater than 10.*p*. The codewords could be configured as pseudo-random codewords (where there is a unique codeword for each pitch/period of the primary features). The codewords could be arranged as discrete (non-overlapping) codewords.

The method of the present invention has been found to be particularly useful for making scale structures where the period *p* is small, for instance not more than 48 µm, for example not more than 32 µm, for example not more than 16 µm, in particular not more than 8 µm, and for instance as small as 4 µm.

As will be understood, "altering the substrate" can comprise, for example: changing the form of the substrate; removing a part of the substrate; and/or adding material to the substrate.

As will be understood, because the primary and secondary features are both formed within the same scale track, it could be described that they are embedded within the same scale track. It could also be described that the secondary features are embedded within the primary features.

The primary features can be formed in groups, e.g. via nominally identical substrate altering processes (e.g. via nominally identical laser marking processes). This is in contrast to each of said primary features in said series being formed sequentially, one at a time, via a nominally identical substrate altering (e.g. laser marking process).

Optionally, either: a) all the primary features that are to be formed on the substrate, are formed on the substrate before any of the secondary features are formed on the substrate; or b) all the secondary features that are to be formed on the substrate, are formed on the substrate before any of the primary features are formed on the substrate. Forming all of one type of feature on the scale before the other can be beneficial in terms of efficiency and/or in terms of optimising the periodicity of the primary features.

Optionally, the substrate is secured to a support during processes i) and/or ii).

The method can comprise, between processes i) and ii), un-securing the substrate from the support and then re-securing the substrate to the same or a different support. This can be beneficial in terms of optimising the periodicity of the primary features. This is particularly the case when the method is configured such that process ii) takes place before process i), because it can release any stresses in the material caused by process ii) before process i) takes place.

Accordingly, the method can be configured such that process ii) takes place before process i).

Altering the substrate can comprise increasing or decreasing the reflectivity of the substrate. Altering the substrate can comprise increasing or decreasing the surface roughness of the substrate.

Forming the primary features in process i) can comprise using a laser to act on and alter the substrate. Forming the secondary features in process ii) can comprise using a laser to act on and alter the substrate. In particular, using a laser to act on an alter the substrate can comprise using a laser to ablate the substrate so as to increase its surface roughness.

Processes i) and ii) can be performed by the same feature forming apparatus/machine. However, this need not necessarily be the case. For instance, processes i) and ii) could be performed by different feature forming apparatus/machines. When processes i) and ii) are performed by the same feature forming apparatus/machine, then different means, e.g. different tools, for example, different laser(s) and/or different laser directors (e.g. mirrors) can be used during processes i) and ii). Accordingly, the method can comprise one or more apparatus/machines configured to perform the processes i) and ii). For example, the method can comprise one or more apparatus/machines for performing the process i) (e.g. via a first control loop) and the process ii) (e.g via a second control loop, for instance, wherein the first control loop operates independently of the second control loop).

The absolute position measurement scale structure can comprise either: a) a mask for subsequent use in an etching process for forming an absolute position measurement scale; or b) an absolute position measurement scale. Accordingly, if the absolute position measurement scale structure comprises a mask for subsequent use in an etching process, the method can comprise using the mask during an etching process so as to form an absolute position measurement scale.

In an optional embodiment, the processes of i) and ii) can be configured such that after both processes have been performed, the scale comprises a scale track comprises a series of features (e.g. lines) having a first property (e.g. a first optical property, e.g. a first optical reflectivity or transmissivity), alternating with features having a second property (e.g. a second optical property, e.g. a second optical reflectivity or transmissivity). For instance, in the case of a transmissive scale/encoder the features having the first property can have (relatively) high optical transmissivity and the features having the second property can have (relatively) low optical transmissivity (such that a feature having the first property has a higher optical transmissivity compared to that of the second property). For instance, in the case of a reflective scale/encoder the features having the first property can have (relatively) high optical reflectivity and the features having the second property can have (relatively) low optical reflectivity (such that a feature having the first property has a higher optical reflectivity compared to that of the second property).

The method can be configured such that after the processes of i) and ii) have both been performed, the scale track comprises a series of features (e.g. lines) having a first property (e.g. a first optical property, e.g. a first optical reflectivity or transmissivity), alternating with features having a second property (e.g. a second optical property, e.g. a second optical reflectivity or transmissivity), and in particular comprises: a) a first series of scale features having the second property arranged according to a first lattice having a period *p*; and b) a second series of scale features also having the second property, embedded within the first series of scale features, wherein the second series of scale features having the second property are irregularly spaced along the measurement direction but are arranged according to a second lattice having a period *P*, where *P* > *p.* The second lattice could be offset along the measurement dimension relative to the first lattice, e.g. by 0.5*p*. The features of the first series of scale features could be arranged such that their centres lie on the first lattice having the period *p*. The features of the second series of scale features could be arranged such that their centres lie on the second lattice having the period *P*. Whilst *P* can take any value which is greater than *p,* it can been preferred that *P* (C/2)*.p* where C is a positive integer greater than 2. In particular, it can be most preferred that *P* = *C.p* and where C is a positive integer greater than 1.

The series of scale features can comprise features of various lengths as measured along the measurement dimension. Optionally, the series of scale features comprises a plurality of "short" scale features having a length less than *p* (e.g. 0.75 or less) and a plurality of "long" scale features having a length greater than *p*. It can be preferred, but is not necessary, that the "short" scale features all have the same length as each other. Similarly, it can be preferred, but is not necessary, that the "long" scale features all have the same length as each other. The particular combination of "short" and "long" scale features over a given/predetermined length ("codeword length") can define a unique absolute position along the length of the scale.

The "short" and "long" scale features can be scale features having the same (optical) property (as described above). Accordingly, in-between the "short" and "long" scale features will be scale features having the alternate (optical) property. In accordance with the description above, the "short" and "long" scale features could both be features having the second property (and so therebetween will be features having the first property). For example, in particularly preferred embodiments, the method is configured such that the scale features comprise "short" and "long" scale features, wherein the "short" and "long" scale features have (relatively) low optical transmissivity (in the case of a transmissive scale) or have (relatively) low optical reflectivity (in the case of a reflective scale). Also in accordance with the description above, the "short" scale features can be arranged according to the first lattice and the "long" scale features can be arranged according to the second lattice. That is the first series of scale features can comprise "short" scale features and the second series of scale features can comprise "long" scale features.

In particularly preferred embodiments, the scale features of the scale track having the first property all have the same length as each other as measured along the measuring dimension, and in particular all have a length less than *p*, e.g. not more than 0.75*p*. For example, in the case of a transmissive scale, it can be preferred that the features having (relatively) high optical transmissivity all have the same length as each other as measured along the measuring dimension. For example, in the case of a transmissive scale, it can be preferred that the features having (relatively) high optical reflectivity all have the same length as each other as measured along the measuring dimension.

Accordingly, to a second aspect of the invention there a method of making an absolute position measurement scale structure which comprises a substrate having a scale track extending along a measuring dimension, the scale track comprising a series of absolute scale features of varying different widths as measured along the measuring dimension, wherein the series of absolute scale features define a continuous series of uniquely identifiable absolute positions along the measuring dimension, the method comprising making the absolute scale features via the following (e.g. mutually-exclusive) steps which can take place in either order:
i) manipulating the substrate within the scale track at regularly spaced locations along the measuring dimension so as to form a series of primary features;
ii) manipulating the substrate within the scale track at plurality of irregularly spaced locations along the measuring dimension so as to form secondary features.

Preferably, the regularly spaced locations of i) and the irregularly spaced locations of ii) are phased with respect to each other such that along the measuring dimension each secondary feature is flanked by (and optionally overlaps with) primary features. (e.g. whereby the leading and trailing ends of each absolute scale feature are defined by primary features).

Features described above in connection with the first aspect of the invention are equally applicable to the second aspect of the invention and vice versa.

There is also described herein a method of making an absolute position measurement scale structure which comprises a series of absolute scale features within a track that extends along a measuring dimension, wherein the series of absolute scale features are formed by performing the following steps, which can take place in either order (e.g. but at temporally-distinct times):
i) forming primary features at regularly spaced locations along the measuring dimension;
ii) forming secondary features at irregularly spaced locations along the measuring dimension;
   wherein the primary and secondary features are phased with respect to each other such that, along the measuring dimension, each secondary feature is flanked by and partially overlaps with primary features, whereby the leading and trailing ends of each absolute scale feature is defined by one or more primary features.

According to a third aspect of the invention there is provided a scale made according to any of the above-described methods/aspects of the invention.

According to a fourth aspect of the invention, there is provided a position encoder apparatus comprising a scale according to any of the above-described methods/aspects of the invention and a readhead for reading the scale from which the relative position of the scale and readhead can be determined.

According to a fifth aspect of the invention there is provided an apparatus/machine configured to make an absolute position measurement scale structure which comprises a substrate having a scale track extending along a measurement dimension, the scale track comprising a series of scale features (said series extending along the measurement dimension), wherein the apparatus/machine is configured with:
i) a first control loop configured to alter the substrate within the scale track at regularly spaced locations along the measurement dimension, according to a predetermined spatial period *p*, so as to form a plurality of primary features;
ii) a second control loop configured to alter the substrate within the scale track at plurality of irregularly spaced locations along the measurement dimension so as to form secondary features.

Features described above in connection with the first to fourth aspects of the invention are equally applicable to the fifth aspect of the invention and vice versa.

Embodiments of the invention will now be described, by way of example only, with reference to the following drawings, in which:
Figure 1 schematically illustrates an absolute position encoder apparatus and shows a section of an absolute position scale made in accordance with the method of the present invention, and a readhead for reading the absolute position scale;
Figure 2 illustrates an example method for making the absolute position measurement scale of Figure 1, according to a first embodiment of the invention;
Figure 3(a) and (b) schematically illustrate an example machine for use in the process of Figures 2 and 5;
Figure 4(a) illustrates the absolute position scale of Figure 1 after completion of the first process of the method of Figure 2;
Figure 4(b) illustrates the absolute position scale of Figure 1 after completion of the second process of the method of Figure 2;
Figure 5 illustrates an example method for making the absolute position measurement scale of Figure 1, according to a second embodiment of the invention;
Figure 6(a) illustrates the absolute position scale of Figure 1 at a first stage in the process of Figure 5;
Figure 6(b) illustrates the absolute position scale of Figure 1 at a second stage in the process of Figure 5;
Figure 7 illustrates a different example embodiment of an absolute position scale made in accordance with the method of the present invention; and
Figure 8 illustrates another different example embodiment of an absolute position scale made in accordance with the method of the present invention.

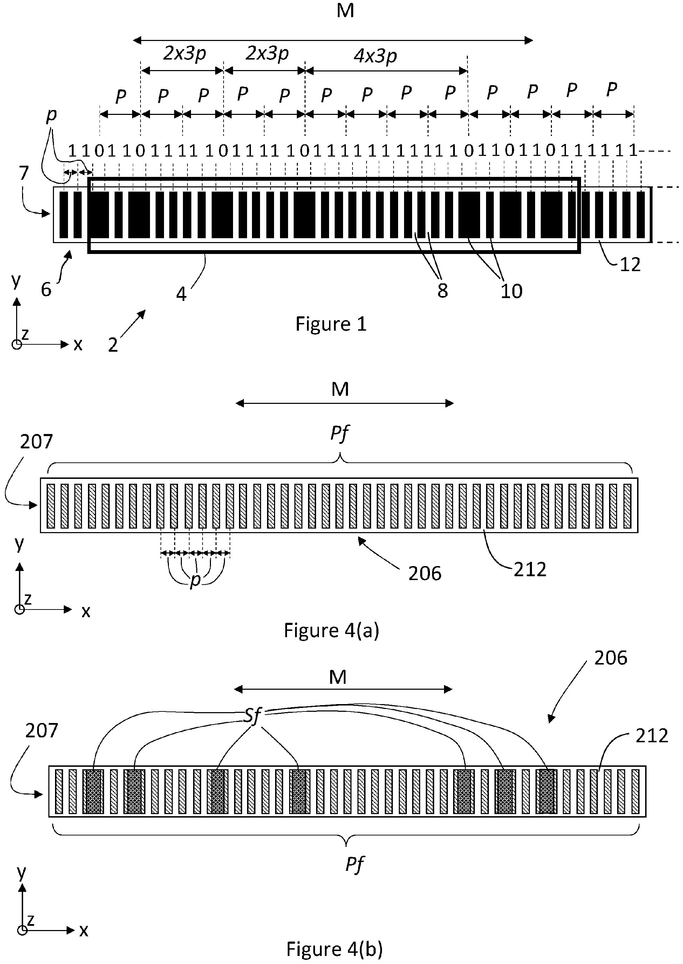

Referring to Figure 1, there is shown an absolute encoder 2 comprising a readhead 4 and a scale 6. In Figure 1, the readhead 4 is illustrated as being transparent such that the scale behind it can be seen, but as will be understood this need not necessarily be the case. The readhead 4 and scale 6 are respectively provided on first and second parts of a machine (not shown) which are moveable relative to each other along the X axis (in the direction indicated by arrow M, which is also herein referred to as the "measurement dimension"). In the embodiment described, the scale 6 is a linear scale. However, it will be understood that the scale 6 could be another type of scale, such as a rotary scale (e.g. ring or disc scale). The readhead 4 has a light source (not shown) for illuminating the scale and a sensor (not shown) for sensing light reflected by the scale track 7 so as to take a reading of a section of the scale track.

Accordingly, in the embodiment described, the scale 6 is an optical absolute scale for a reflective optical encoder apparatus. Accordingly, the scale 6 is a reflective optical absolute scale and comprises a substrate 12 having a track 7 comprising alternating regions of relatively high optical reflectivity 8 and regions of relatively low optical reflectivity 10. For the sake of brevity and clarity, in this embodiment it will be assumed that the regions of relatively low optical reflective are substantially non-reflective and therefore will be referred to simply as "non-reflective" regions/features 10, and similarly the regions of relatively high optical reflectivity will be referred to simply as "reflective" regions/features 8. Because the " reflective" regions will appear bright to the readhead 4 (i.e. its sensor), then they could be referred to as relatively bright regions, or just "bright" regions/features. Similarly, because the "non-reflective" regions will appear dark to the readhead 4 (i.e. its sensor), then they could be referred to as relatively dark regions, or just "dark" regions/features.

As will be understood, in other embodiments, the encoder apparatus can be a transmissive optical absolute encoder apparatus, in which case the readhead 4 can have a light source on one side of the scale and a sensor on the other side of the scale so as to take a reading of a section of the scale track. In such a case, the scale can be an optical absolute scale for a transmissive optical encoder apparatus. Accordingly, in such a case, the scale can be a transmissive optical absolute scale comprising a substrate having a track comprising alternating regions of relatively high optical transmissivity and regions of relatively low optical transmissivity. In such a case, because the regions of relatively high optical transmissivity will appear bright to the readhead 4 (i.e. its sensor), then they could be referred to as relatively bright regions. Similarly, because the regions of relatively low optical transmissivity will appear dark to the readhead 4 (i.e. its sensor), then they could be referred to as relatively dark regions.

The reflective 8 and non-reflective 10 features are arranged according to a nominally regular/periodic lattice having a period *p*. As a result, and as illustrated in Figure 1, the scale track has a "dark"/"non-reflective" region (or a "region of relatively low optical reflectivity") consistently at regularly spaced locations along its measurement dimension at a nominal period *p* (i.e. as illustrated in Figure 1, there is an identifiable period *p* at which at each and every period *p*, the scale track has relatively low optical reflectivity). In the embodiment described, the period *p* of the nominally regular/periodic lattice is 8 µm, but this need not necessarily be the case, although the invention has been found to be particularly useful for scales having smaller periods (i.e. where *p* is not more than 32 µm, in particular where *p* is not more than 20 µm, especially preferably where *p* is not more than 10 µm).

As illustrated in Figure 1, in the embodiment described, it could be described that absolute data is encoded in the track 7 by way of the selected presence or absence of a reflective feature within each period of the regular/periodic lattice (but as will be understood, other coding schemes are possible and are known). As shown, as a result of the encoding, the scale comprises non-reflective features 10 of various lengths (as measured along the measurement dimension M). As explained earlier in this document, arranging the absolute scale features in a scale track in accordance with a nominally regular/periodic lattice structure has the advantage that fine-pitch phase information can be extracted from a reading of absolute scale features, i.e. position information which is finer than the period *p* of the nominally regular/periodic lattice structure can be extracted from a reading of absolute scale features. Example embodiments of how this can be achieved are explained in US11619521 and US7499827. As explained in US11619521 and US7499827, this can be achieved even when features are arranged such that they depart from the regular/periodic lattice structure (e.g. so as to define/embed the absolute position information), so long as sufficient periodic structure remains in the absolute scale features.

The readhead 4 has a light source (not shown) for illuminating the scale and a sensor (not shown) for sensing light reflected by the scale track 7 so as to take a reading of a section of the scale track. The readhead 4 operates in the infra-red region of light, but this need not necessarily be the case (e.g. an optical encoder/readhead can operate anywhere in electromagnetic spectrum from the infra-red region to the ultraviolet region). The reading could be, for instance, an image of a section of the scale track formed on the sensor by one of more optical devices (e.g. such as a lens). The reading could be a shadow-cast reading of a section of the scale track formed. In any case, the absolute position of the readhead 4 and scale 6 along the measurement dimension M can be determined at any position along the measurement dimension M by the particular combination of the reflective 8 and non-reflective features 10 in a scale reading obtained by the readhead's 4 sensor.

In the embodiment described, the absolute data is encoded in the form of discrete codewords which are each a predetermined number of bits or periods long (e.g. typically will be anywhere between 15 periods *p* long and 100 periods *p long*, but as will be understood, could be a greater or smaller number of periods *p* long, depending on the requirements of the scale/encoder). Accordingly, in the embodiment described, the readhead's 4 (e.g. it's sensor's sensing length) is sufficiently long such that the readhead/sensor will always be able to detect at least one whole codeword. As will be understood, in other embodiments, the absolute data can be encoded as a pseudorandom bit sequence (e.g. as described in European Patent no. EP0503716, wherein as described therein, a pseudo-random sequence is to be understood to mean a sequence wherein a displacement of the readhead over one pitch of the track always produces a specific code for each pitch.

The position of the readhead 4 and scale 6 can be determined by extracting the codeword(s) (defined by the particular combination of the reflective 8 and non-reflective features 10) contained in the reading obtained by the readhead, and (for instance) looking up in a look-up table what position along the measurement dimension M that(those) codeword(s) represents. As mentioned above, and as explained in more detail in US 11619521 and US7499827, fine-pitch phase information (i.e. position information which is finer than the period p of the nominally regular/periodic lattice structure; and therefore, as will become apparent later on, position information which finer than the period *p* of the primary features *Pf*) can be extracted from the reading of absolute scale features (e.g. via a Fourier Analysis of the reading of the absolute scale features).

In the embodiment described, the scale 6 is an optical reflective scale, but it could instead be an optical transmissive scale (in which case the readhead 4 can have a light source on one side of the scale and a sensor on the other side of the scale). In other embodiments, the encoder 2 is not an optical absolute encoder, but instead could be for instance a capacitive, magnetic or inductive absolute encoder (in which case the scale comprises features of different capacitive, magnetic or inductive properties, and the readhead comprises an appropriate capacitive, magnetic or inductive sensor).

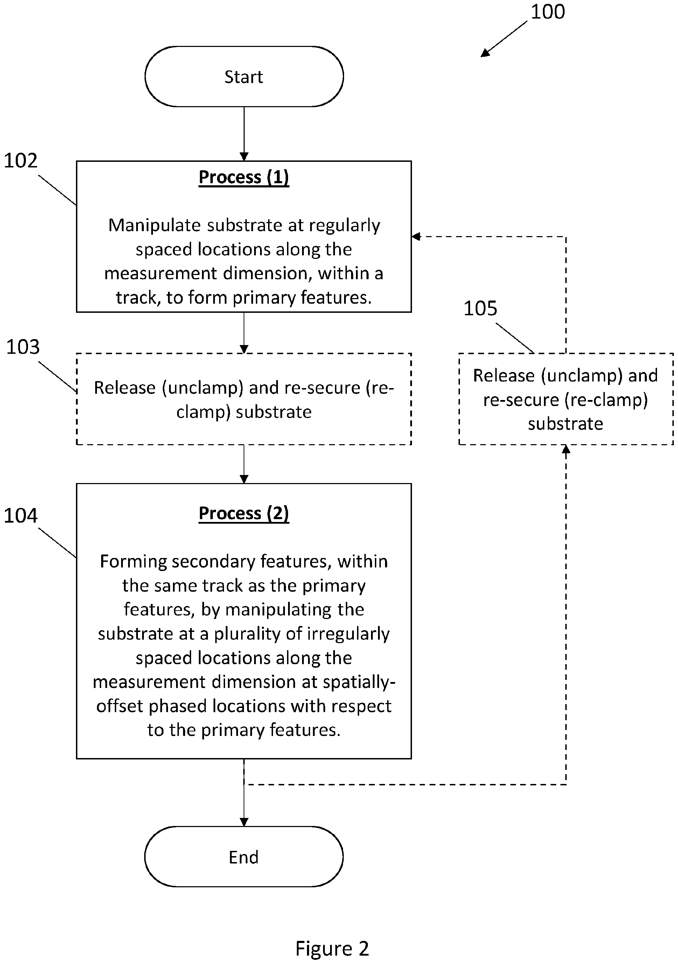

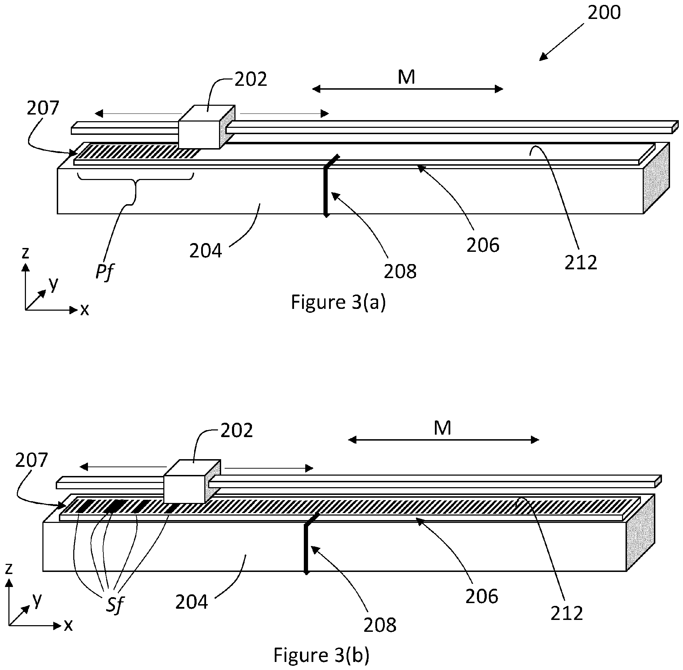

Figure 2 illustrates an example method 100 for making a scale 206 in accordance with the present invention. Reference will also be made to Figures 3 and 4 as part of the explanation of the method 100.

The method 100 involves a first process 102, wherein a machine 200 (see Figure 3), alters a substrate 212 located on a support 204 of the machine 200 at a plurality of regularly spaced locations (along what is to be the measurement dimension M of the scale 206), according to a predetermined spatial period p, so as to form a series of primary features "*Pf*" within a scale track 207. In the embodiment described, the alteration of the substrate causes the reflectivity of the substrate 212 to be reduced in the region where the alteration takes place; of course this need not necessarily be the case and the alteration can cause another change in the optical property of the substrate which is detectable by/used to create the optical signal sensed by, a readhead 4 for reading the scale (e.g. such as increasing the reflectivity, or changing its diffractive properties).

As illustrated in Figure 4(a), such a series of primary features "*Pf*" are arranged in accordance with a first nominally regular/periodic lattice structure, and therefore are located according to a period "*p*". In the embodiment described, the machine 200 comprises a laser (not shown) which is used to alter the substrate 212 so as to form the primary features *Pf.* In the embodiment described, the length of the primary features *Pf* (as measured along the measurement dimension) is substantially 0.5*p*. However, as will be understood, whilst it can be preferred that the length of the primary features *Pf* is 0.5*p*, this need not necessarily be the case, and the length of the primary features can be configured to be not greater than 0.75*p* and not less than 0.25*p*.

Referring to Figure 3(a), the machine 200 comprises a laser beam directing unit 202 (e.g. which can comprise a mirror - not shown) for directing a laser beam from the laser onto the substrate 212, so as to "hit" it, thereby altering the substrate at the region where it hits the substrate. The machine 200 could form each primary feature *Pf* one at a time, or could form groups of primary features simultaneously. For instance, the comprise a beam directing unit 202 could also comprise a beam splitter such that when the laser is activated so as to "hit" the substrate 212 with its laser beam, the unit 202 splits and directs the laser beam such that it falls on the substrate 212 simultaneously at a plurality of regularly spaced locations (i.e. a "*x*" locations, where x is a positive integer greater than or equal to 1), e.g. such that a plurality of primary features *Pf* are formed simultaneously. In the particular embodiment described, ablation of the substrate 212 occurs at the locations at which the laser beam falls on the substrate. However, this need not necessarily be the case. For instance, melting of the substrate 212 could occur at the locations at which the laser beam falls on the substrate, so as to form the primary features *Pf.* In other embodiments, nano-structures can be formed by the laser (e.g. as described in European Patent no. EP2946176).

The unit 202 and substrate 212 are moved relative to each other along the measurement dimension M by a predetermined distance "*d*" and the laser is operated so as to form further primary features *Pf* (which are in phase with the previously formed primary features, i.e. such that all the primary features *Pf* lie on the same nominally regular/periodic lattice, having the period *p*). This can be repeated as many times as necessary until all the primary features *Pf* have been formed. In the embodiment described, the unit 202 is moved along the measurement dimension and the substrate remains stationary, but this need not necessarily be the case.

Depending on the particular laser, substrate and technique used (and/or depending on the preferred outcome), it could be that one such "hit" by the laser is sufficient to form the primary features. In an alternative embodiment, it could be that multiple "hits" by the laser is required to form a primary feature.

As will be understood, rather than the primary features *Pf* being formed in a plurality of steps between which relative movement of the unit 202 and substrate 212 is required, all of the primary features *Pf* could be formed in one go/step (which could still involve operating the laser to perform multiple hits) thereby avoiding the need to relatively move the part 202 and substrate 212). Alternatively, the machine 200 could be configured such that the laser can hit the scale at only one location at a time, such that each primary feature is formed one at a time.

In the embodiment described, the length (in the measurement dimension M) and period *p* of the primary features *Pf* are such that the length (in the measurement dimension M) of the reflective 8 and non-reflective 9 parts of the substrate are equal (but as will be understood, this need not necessarily be the case). In other words, in the embodiment described, the ratio of a) the length (in the measurement dimension M) of the primary scale features to b) the space between them is 1:1, but this need not necessarily be the case.

Via a second process 104 in the method 100, the machine 200 alters the substrate 212 located thereon (in this embodiment on a machine bed 202) at a plurality of irregularly spaced locations along the measurement dimension M, so as to form secondary features "*Sf"* within the same scale track as the primary features *Pf.* As illustrated in Figure 4(b), the secondary features *Sf* are located in an offset configuration relative to the primary features *Pf* along the measurement dimension. In particular, in the embodiment described, the primary *Pf* and secondary *Sf* features are phased with respect to each other along the measurement dimension M such that, along the measurement dimension, each secondary feature *Sf* is flanked by primary features *Pf.* No only that, but in the embodiment described, the length of each secondary feature *Sf* (measured along the measurement dimension) is slightly longer than the distance between each primary feature so as to ensure that the secondary feature overlaps with it adjacent primary features (thereby avoiding any gap therebetween). Together, the primary scale features *Pf* and the secondary scale features *Sf* provide the series of absolute scale features illustrated in Figure 1.

Similar to the first process 102, the second process 104 could require operating the laser to perform multiple hits of the substrate at the same location. In the embodiment described, each secondary feature *Sf* is formed separately from other secondary features, and the unit 202 and substrate 212 are moved relative to each other between forming different secondary features, but this need not necessarily be the case. For instance, the unit 202 could be configured with a mask or other device configured such that the laser beam from the laser (not shown) can be directed so as to land on the substrate at multiple locations so as to thereby form multiple secondary features simultaneously.

In the method 100 of Figure 2, the first 102 and second 102 processes can be performed simultaneously. For instance, the machine 200 could have two lasers and/or two laser beam direction units 202 (e.g. spaced apart along the x-axis), one of which is used to form the primary features *Pf,* and the other of which is used to form the secondary features *Sf,* such that the substrate can be worked on simultaneously, and/or in an alternating manner. However, it can be preferred that the first 102 and second 102 processes are performed mutually-exclusively, e.g. at temporally separated times. For example, the first process 102 could take place before the second process 102, or vice versa. In particular, for example, all of the primary scale features could be formed on the substrate (via the first process 102) before any secondary features are on the substrate (via the second process), or vice-versa. This can be beneficial for optimising the regularity/periodicity of the primary features. In another example, the method be an iterative method whereby the first process 102 is used to form some of, e.g. a substantial group of, primary scale features on the substrate (e.g. at least 10 primary scale features, preferably at least 20 primary scale features) before the second process 102 is used to form secondary features within that group of primary scale features, and wherein the first 102 and second 102 process are repeated in that manner until all the desired primary and secondary scale features have been made.

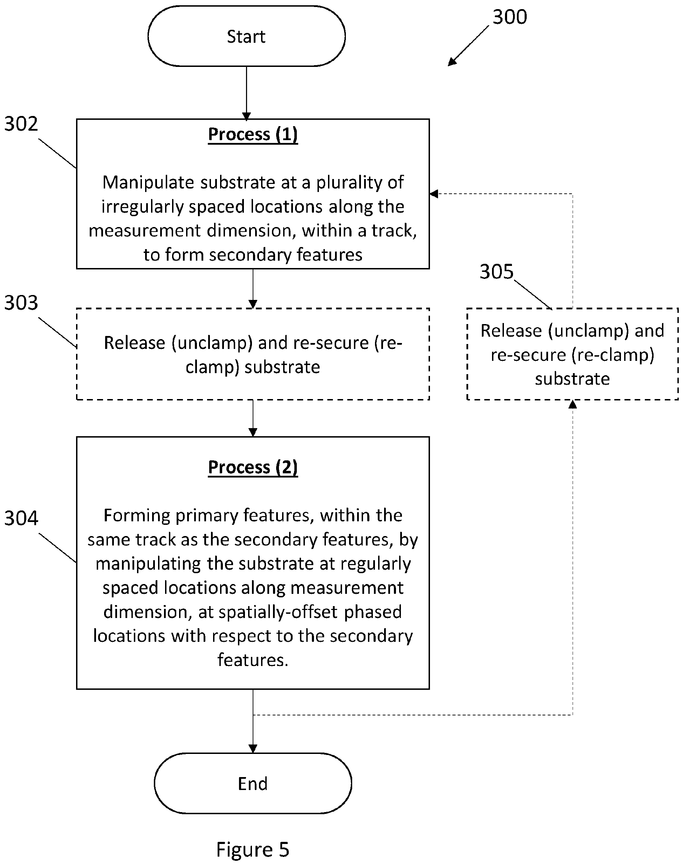

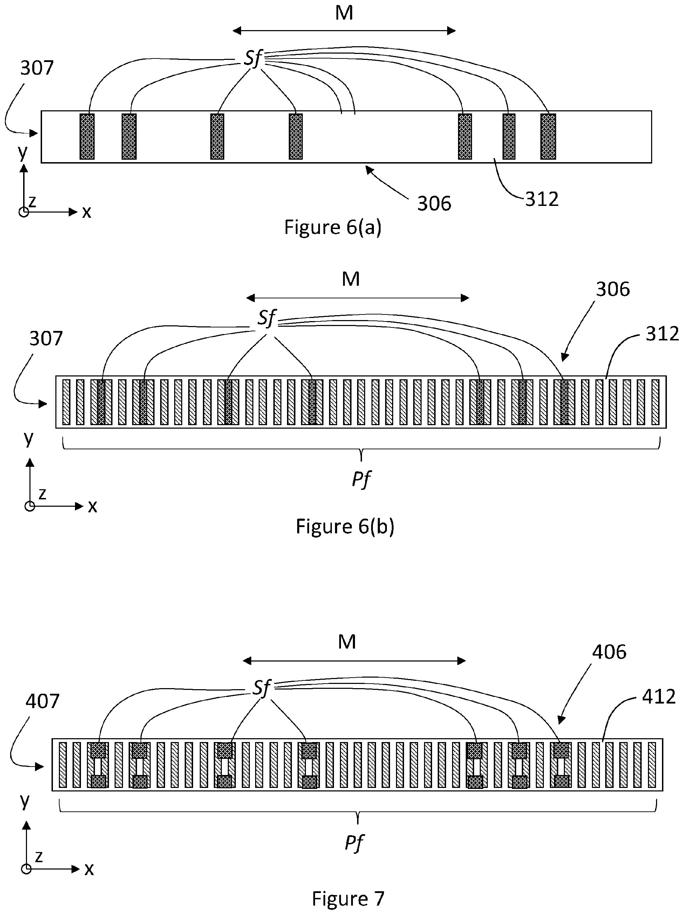

Figure 5 illustrates an alternative embodiment method 300 for making an absolute scale structure 306 in accordance with the present invention. Reference will also be made to Figure 6 as part of the explanation of the method 300. In this method 300, it should be noted that it is required that the first process 302 and second process 304 do not take place simultaneously.

During the first process 302 of the method 300 of Figure 5, a machine (e.g. machine 200 of Figure 3), alters a substrate 312 located thereon at a plurality of irregularly spaced locations (along what is to be the measurement dimension M of the scale 306), so as to form a plurality of secondary features "*Sf"* within a scale track 307. As per the method 100 of Figure 2, such a scale alteration can comprise using a laser to ablate the substrate 312, so as to reduce the reflectivity of the substrate 312 (e.g. by increasing its surface roughness).

During the second process 304 of the method 300 of Figure 5, which takes place after the first process 302, a machine (e.g. the machine 200 of Figure 3), alters a substrate 312 located thereon at a plurality of regularly spaced locations (along what is to be the measurement dimension M of the scale 306), so as to form a series of primary features "*Pf"* within the scale track 307.

It can be beneficial to form the primary features after the secondary features have been formed (in particular, for example, after all of the secondary features have been formed on the substrate), because any irregular deformation of the substrate caused by the formation of features at irregular locations has taken place before the primary features are formed. Therefore, performing the processes in this order can help to improve/optimise the regularity/periodicity of the primary features (improve/optimise how well the primary features conform to a given period).

The technical considerations, methods, and optional variations described above for making the primary *Pf* and secondary *Sf* features in connection with the process 100 of Figure 2 (such as whether the laser melts/ablates or otherwise alters the substrate, how many laser hits are used to form the secondary features, etc) are equally applicable to the process 300 of Figure 5 and for the sake of brevity so will not be repeated here. Indeed, the processes can be substantially identical except for the order in which the primary *Pf* and secondary *Sf* features are formed.

In the processes 100, 300 described above in connection with Figures 2 and 5, the substrate 212, 312 could be secured to the machine bed 204 during the first 102, 302 and/or second 104, 304 processes, e.g. via clamp 208. In such a case, and in those embodiments where the first 102, 302 and second 104, 304 processes do not occur simultaneously, then as illustrated by the dashed boxes 103, 303, there can be an optional step of releasing and re-securing (e.g. unclamping and re-clamping) the substrate 212, 312 between the first 102, 302 and second 104, 304 processes. This has the effect of enabling internal stresses within the substrate 212, 312 to be released between the stages. This can be particularly beneficial for the process 300 of Figure 5 when the primary features *Pf* are formed after the secondary features *Sf,* because doing so ensures that the substrate adopts its natural shape/form before the primary features *Pf* are formed.

As explained above, and as illustrated by the dashed arrows in Figures 2 and 5, the methods 100, 300 could be iterative methods, whereby only some of the primary features are made before secondary features are added (or vice versa), thereby requiring a repetition of the two first 102, 104 and second 302, 304 processes in order to form the full length of the scale. In such a case, there can be an optional step 105, 305 of releasing and re-securing the substrate to the machine bed 204 in order to release any internal stresses within the substrate 212, 312.

In the embodiments described, the second process 104, 304 is performed on the same machine as the first process 102, 302, using the same or similar substrate processing technique (which in the embodiments described, is laser ablation). However, this need not necessarily be the case. For instance, different processing techniques can be used in the first 102, 302 and second 104, 304 processes, even if they are performed on the same machine. For instance, the first process 102, 302 can utilise a laser substrate-ablation process and the second process 104, 304 can utilise a laser substrate-melting process (or vice versa). In another embodiment, the first and second processes take place on completely different machines. For example, a first machine could be configured to form the primary features via a substrate etching process and a second machine could be configured to form the secondary features via a laser (e.g. ablation) process, or vice versa. In another embodiment, one or both of the first 102, 302 and second 104, 304 processes of the methods 100, 300 can comprise depositing a material on the substrate so as to from the primary and/or secondary features, e.g. the secondary features could be formed by a machine "printing" features on the substrate.

As will be understood, the first 102, 302 and second 104, 304 processes described above, could control loops of a machine/apparatus. Accordingly, for example, the apparatus 200 can comprise a first control loop configured to manipulate substrate at regularly spaced locations along the measurement dimension, within a track, to form primary features, and a second control loop configured to form secondary features, within the same track as the primary features, by manipulating the substrate at a plurality of irregularly spaced locations along the measurement dimension at spatially-offset phased locations with respect to the primary features. The control loops could be open or closed-control loops.

In the embodiments described above, the resulting structure formed via the methods 100, 300 is an absolute scale, e.g. the absolute scale 6 which is configured to be read by a readhead 4. However, this need not necessarily be the case. For instance, the resulting structure could be a mask which is used in a subsequent scale forming process. For instance, the methods 100, 300 could be used to make an etch-resist structure having an absolute scale pattern formed therein/thereon, which is used in a subsequent etching process to form an absolute scale. Accordingly, for example, in such a case, the first and second processes of the methods 100, 300 can comprise altering the substrate 212 so as to form holes therein; in other words, the primary *Pf* and secondary *Sf* features can comprise holes extending through the depth of the substrate (in the z-dimension).

In the embodiments described above, the width of the secondary features *Sf* (as measured perpendicular to the measurement dimension M) are substantially the same as the width of the primary features. However, this need not necessarily be the case. For instance, they could be shorter, for example half the width of the primary features *Pf,* (or vice versa). In other embodiments, the secondary features *Sf* could be split into laterally-offset bands, e.g. as illustrated in Figure 7.

In the embodiments described above, the secondary features *Sf* overlap adjacent primary features *Pf* so as to form a continuous block. This has been found to be preferred (in particular when considering the quality of the of fine-pitch position information extracted from the absolute scale features), but this isn't necessarily essential. For instance, a secondary feature *Sf* could be sufficiently thin (in the measurement dimension) such that it sits between, but not touching adjacent primary features. Similarly, a secondary feature could be configured to touch/overlap one of its adjacent primary features but not the other.

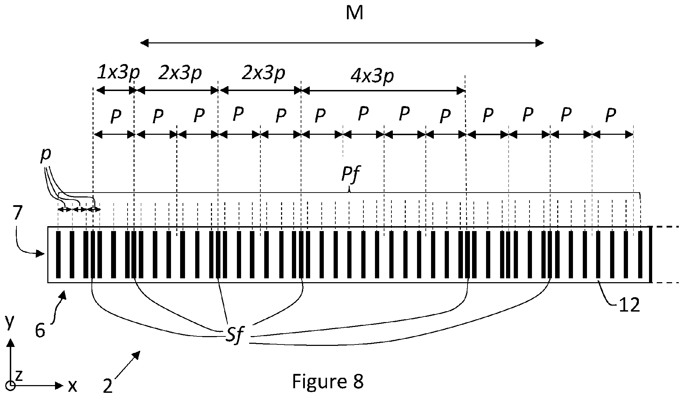

An alternative embodiment is shown in Figure 8. This embodiment is substantially the same as that of Figure 1, and like parts share like reference numbers. However, in this embodiment, the lengths of the primary features *Pf* and the secondary features *Sf* are such that the secondary features *Sf* do not overlap with the primary features *Pf.*

In the embodiments described above, the secondary features *Sf* are arranged according to a lattice having a period *P* where *P* = C*.p* and where C is a positive integer greater than 1 (in the particular embodiments of Figures 1 and 3, C = 3). However, this need not necessarily be the case. For example, the secondary features *Sf* need not necessarily be arranged according to a fixed period/lattice at all.

## Claims

1. A method for making an absolute position measurement scale structure which comprises a substrate having a scale track extending along a measurement dimension, the scale track comprising a series of scale features, the method comprising making the scale features via the following two processes:
i) a process configured to alter the substrate within the scale track at regularly spaced locations along the measurement dimension, according to a predetermined spatial period *p*, so as to form a plurality of primary features; and
ii) a process configured to alter the substrate within the scale track at a plurality of irregularly spaced locations along the measurement dimension so as to form secondary features.

2. A method as claimed in claim 1, wherein i) and ii) are spatially phased with respect to each other such that, along the measurement dimension, each secondary feature is flanked by primary features.

3. A method as claimed in claim 1 or 2, configured such that the leading and trailing ends of each scale feature are defined by primary features.

4. A method as claimed in any preceding claim, wherein:
- all the primary features that are to be formed on the substrate, are formed on the substrate before any of the secondary features are formed on the substrate; or
- all the secondary features that are to be formed on the substrate, are formed on the substrate before any of the primary features are formed on the substrate.

5. A method as claimed in any preceding claim, configured such that each secondary feature is flanked by and at least partially overlaps with primary features, whereby the leading and trailing ends of each scale feature are defined by primary features.

6. A method as claimed in any preceding claim, wherein:
• the substrate is secured to a support during i) and ii);
• the method is configured such that ii) takes place before i);
• wherein between ii) and i), the substrate is unsecured from the support and re-secured to the same or a different support.

7. A method as claimed in any preceding claim, wherein steps i) and ii) are performed by the same feature forming apparatus.

8. A method as claimed in any preceding claim, wherein the absolute position measurement scale structure comprises either:
a) a mask for subsequent use in an etching process for forming an absolute position measurement scale; or
b) an absolute position measurement scale.

9. A method as claimed in any preceding claim, wherein forming the primary and secondary features in i) and ii) comprises using a laser to act on and alter the substrate.

10. A method as claimed in any preceding claim, wherein the series of scale features comprise features of various lengths as measured along the measurement dimension.

11. A method of making an absolute position measurement scale structure which comprises a substrate having a scale track extending along a measuring dimension, the scale track comprising a series of absolute scale features of varying different widths as measured along the measuring dimension, the method comprising making the absolute scale features via the following mutually-exclusive steps which can take place in either order:
i) manipulating the substrate within the scale track at regularly spaced locations along the measuring dimension so as to form a series of primary features;
ii) manipulating the substrate within the scale track at plurality of irregularly spaced locations along the measuring dimension so as to form secondary features.

12. A method as claimed in claim 11, wherein the regularly spaced locations of i) and the irregularly spaced locations of ii) are phased with respect to each other such that along the measuring dimension each secondary feature is flanked by, and optionally overlaps with, primary features.

13. A scale made according to any of the above-described methods.

14. A position encoder apparatus comprising a scale according to claim 14 and a readhead for reading the scale from which the relative position of the scale and readhead can be determined.

15. An apparatus for make an absolute position measurement scale structure which comprises a substrate having a scale track extending along a measurement dimension, the scale track comprising a series of scale features, wherein the apparatus is configured with:
i) a first control loop configured to alter the substrate within the scale track at regularly spaced locations along the measurement dimension, according to a predetermined spatial period *p*, so as to form a plurality of primary features;
ii) a second control loop configured to alter the substrate within the scale track at plurality of irregularly spaced locations along the measurement dimension so as to form secondary features.
